# EUROPÄISCHE PATENTSCHRIFT

(11) **EP 2 505 444 B1**
(45) Veröffentlichungstag und Bekanntmachung des Hinweises auf die Patenterteilung: **14.11.2018**
(21) Anmeldenummer: 12156150.0
(22) Anmeldetag: 20.02.2012
(51) Int. Cl.: B60T 17/00

(54) **Druckluftaufbereitungsanlage und Verfahren zur Herstellung einer Druckluftaufbereitungsanlage**
Compressed air conditioning unit and method for manufacturing same
Installation de traitement de l'air comprimé et procédé de fabrication d'une installation de traitement de l'air comprimé

(30) Priorität: 22.02.2011 DE 102011012031
(43) Veröffentlichungstag der Anmeldung: 03.10.2012
(60) Teilanmeldung: 17165141.7
(73) Patentinhaber: KNORR-BREMSE Systeme für Nutzfahrzeuge GmbH, 80809 München (DE)
(72) Erfinder: Schnittger, Karsten, 80935 München (DE); Reifinger, Günther, 82118 Germering (DE); Huber, Georg, 85464 Neufinsing (DE); Cabariste, Hubert, 14160 Dives sur Mer (FR)
(74) Vertreter: Mattusch, Gundula

(56) Entgegenhaltungen:
- EP-A1- 2 127 727
- EP-A2- 1 527 974
- DE-A1- 19 535 972
- DE-A1-102008 053 996

## Beschreibung

Die vorliegende Erfindung betrifft eine Druckluftaufbereitungsanlage für ein Fahrzeug, insbesondere für ein Nutzfahrzeug, umfassend einen Drucklufteingang, eine Lufttrocknerpatrone, die über eine Druckluftförderleitung mit dem Drucklufteingang gekoppelt ist, und ein Ablassventil, das in einer an einem Verzweigungspunkt von einer Druckluftförderleitung abzweigenden Entlüftungsleitung angeordnet ist, gemäß dem Oberbegriff von Anspruch 1.

Die vorliegende Erfindung betrifft weiterhin ein Verfahren zur Herstellung einer Druckluftaufbereitungsanlage für ein Fahrzeug, insbesondere ein Nutzfahrzeug, wobei die Druckluftaufbereitungsanlage einen Drucklufteingang, eine Lufttrocknerpatrone, die über eine Druckluftförderleitung mit dem Drucklufteingang gekoppelt ist, und ein Ablassventil, das in einer an einem Verzweigungspunkt von der Druckluft förderleitung abzweigenden Entlüftungsleitung angeordnet ist, umfasst, gemäß dem Oberbegriff von Anspruch 8. Eine solche Druckluftaufbereitungsanlage bzw. ein solches Verfahren sind aus DE 195 35 972 A1 bekannt.

Druckluftaufbereitungsanlagen sind ein zentraler Bestandteil der Druckluftversorgungsanlagen von Fahrzeugen, insbesondere Nutzfahrzeugen, wie beispielsweise Lastkraftwagen und Schienenfahrzeuge. Derartige Fahrzeuge weisen Teilsysteme auf, welche mit Druckluft betrieben werden. Zu diesen Teilsystemen können beispielsweise die Bremsen des Fahrzeugs gehören. Die verdichtete Druckluft wird in der Regel mithilfe eines ölgeschmierten Kompressors erzeugt, der Umgebungsluft ansaugt und verdichtet. Ein Teil des zur Kompressorschmierung verwendeten Öls wird während des Kompressorbetriebs von der verdichteten Luft aufgenommen und gelangt über den Kompressorausgang in das nachgeordnete Leitungssystem. Um eine Kontaminierung des gesamten nachgeordneten Druckluftsystems mit schädlichen Öl- und Schmutzpartikeln und der in der Druckluft vorhandenen Luftfeuchtigkeit zu verhindern, ist üblicherweise eine Druckluftaufbereitungsanlage zwischen dem Kompressor und den einzelnen Druckluftverbrauchern angeordnet, die die vom Kompressor bereitgestellte Druckluft von Öl- und sonstigen Schmutzpartikeln reinigt und die in ihr enthaltene Feuchtigkeit zurückhält. Zu diesem Zweck kann eine Lufttrocknerpatrone vorgesehen sein, die sowohl Öl- und Schmutzpartikel zurückhält, als auch mithilfe eines Trockenmittels der Druckluft Feuchtigkeit entzieht.

Um die Lebensdauer dieser Lufttrocknerpatrone zu erhöhen und um den Energieverbrauch der Druckluftversorgungsanlage insgesamt zu reduzieren, ist es bekannt, bereits aufbereitete Druckluft in umgekehrter Strömungsrichtung durch die Lufttrocknerpatrone strömen zu lassen, um diese zu regenerieren. Die hierfür verwendete Regenerationsluft wird über eine Entlüftung aus dem System abgeführt, welche an die Druckluftförderleitung, das heißt die Verbindungsleitung zwischen dem Kompressor und der Luftfilterpatrone, abgeschlossen ist. Um einen dauerhaften Druckverlust über diese Entlüftung zu verhindern, wird eine Ventileinrichtung in Form eines Absperrventils vorgesehen, die den Druckluftpfad zur Entlüftung im Normalbetrieb verschließt. Aufgrund der Positionierung des Absperrventils "vor" der Lufttrocknerpatrone steht dieses Absperrventil ständig in Kontakt mit nicht aufbereiteter Druckluft, so dass erhöhte Anforderungen an das Absperrventil gestellt werden müssen, insbesondere hinsichtlich der Robustheit.

Aufgrund von stetig steigenden Betriebsdrücken der verwendeten Druckluftanlagen mit höheren Temperaturen im Motorraum steigt gleichzeitig auch die Temperatur der komprimierten Luft in dem Kompressor am Ende eines Verdichtungstaktes an. Steigende Temperaturen der schmutzbehafteten verdichteten Luft verursachen jedoch verstärkt eine Verkohlung der aufgenommenen Öl- und Schmutzpartikel, die sich im Inneren der Anlage niederschlagen und ansammeln können und nur schwer aus dem System entfernbar sind. Diese Verkohlungen stellen kleine Feststoffpartikel dar, die insbesondere bei einer Aggregation zu größeren Partikeln die Funktionsfähigkeit des Absperrventils beeinträchtigen können. Das kann zu einem Verklemmen oder zu einem nicht mehr vollständig schließenden Absperrventil führen.

Der vorliegenden Erfindung liegt daher die Aufgabe zugrunde, das Ablassventil vor derartigen Verkohlungen und Verschmutzungen zu schützen.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung geht wie die gattungsgemäße Druckluftaufbereitungsanlage davon aus, dass ein Siebelement zumindest teilweise zwischen dem Verzwei-gungspunkt und dem Ablassventil in der Entlüftungsleitung angeordnet ist.
Durch das Vorsehen des Siebelementes werden die unerwünschten großen Feststoffparti- kel, die die Funktionsfähigkeit des Ablassventils stören könnten, zurückgehalten, während kleinere Feststoffpartikel, die für das Ablaufventil unkritisch sind, ungehin- dert durch das Ablassventil hindurchtreten können. Die Formulierung "zumindest teilweise zwischen dem Verzweigungspunkt und dem Ablassventil in der Entlüftungsleitung angeordnet" ist so zu verstehen, dass ein Teil oder
das gesamte Siebelement in der Entlüftungsleitung in Strömungsrichtung vor dem Ablassventil positioniert ist. Es ist dabei denkbar, dass ein Teil des Siebelementes in die Druck- luftförderleitung zwischen dem Kompressor und der Lufttrocknerpatrone hineinragt und dabei eventuell den Verzweigungspunkt bildet oder über diesen sogar
hinausragt. Das muss allerdings nicht der Fall sein. Dann kann das Siebelement vollständig zwischen dem Verzweigungspunkt und dem Ablassventil liegen.

Erfindungsgemäß ist vorgesehen, dass die Entlüftungsleitung zumindest teilweise als ein Einschubkanal ausgeführt ist, der sich in einer axialen Richtung in einem Gehäuse der Druckluftaufbereitungsanlage erstreckt, wobei das Siebelement in der axialen Richtung in den Einschubkanal einschiebbar ist. Die Einschiebbarkeit des Siebelementes erlaubt eine leichte Zugänglichkeit des Siebelementes, die eine Voraussetzung für eine einfache Montage und Demontage darstellt. Unter einschiebbar kann dabei sowohl eine einfache geradlinige Bewegung, das heißt ein Einschieben, in der axialen Richtung als auch eine Schraubbewegung um die axiale ' Richtung verstanden werden. Die axiale Richtung kann vorzugsweise parallel zu einer Montagerichtung der Lufttrocknerpatrone liegen, prinzipiell ist jedoch auch jede andere Orientierung der axialen Richtung relativ zu der Montagerichtung denkbar. Der Einschubkanal ist dabei bevorzugt von der Gehäuseaußenseite zugänglich, um einen Montagezugriff zu gewährleisten.

Vorteilhafterweise kann vorgesehen sein, dass eine Durchtrittsfläche des Siebelements senkrecht zu einer Querschnittsfläche des Einschubkanals liegt. Die Querschnittsfläche bezeichnet in üblicher Weise die Fläche in der Ebene senkrecht zu der axialen Erstreckungsrichtung des Einschubkanals. Die Durchtrittsfläche bezeichnet die aktive Siebfläche, durch die die zu siebende Luft während des Siebens strömt. Durch die besondere Orientierung der Durchtrittsfläche kann die Fläche des Siebes, die aktiv während des Siebens wirkt, im Verhältnis zu der Querschnittsfläche des Einschubkanals vergrößert werden, so dass der Staudruck des Siebele-mentes durch Beladung des Siebelementes mit ausgesiebten Partikeln reduziert wird.
Je nach Bedarf kann auch eine andere Orientierung der Durchtrittsfläche relativ zu der Querschnittsfläche gewählt werden, beispielsweise um Staudrücke innerhalb des Systems zu reduzieren oder um das Ablagern der ausgesiebten Partikel zu beeinflussen.

Es kann auch vorgesehen sein, dass das Siebelement eine Kopffläche umfasst, die zusammen mit der Durchtrittsfläche eine Abströmseite des Siebelements von einer Anströmseite des Siebelements trennt. Es ist allerdings auch denkbar, dass die Kopffläche ebenfalls als eine weitere Durchtrittsfläche wirkt, um die insgesamt vorhandene Durchtrittsfläche weiter zu vergrößern.

Weiterhin kann vorgesehen sein, dass das Siebelement ein Montageelement umfasst. Das Montageelement kann beispielsweise als einfacher Haltebügel ausgeführt sein, welcher über das Gehäuse hinausragen kann. Auf diese Weise ist ein besonders einfacher Zugriff auf das Siebelement möglich, da durch das Greifen des Halteelementes das Siebelement in einfacher Weise aus dem Einschubkanal herausgezogen beziehungsweise herausgeschraubt werden kann. Das Halteelement kann flexibel ausgebildet sein, um ein Verschließen des Einschubkanals beziehungsweise des Gehäuses zu ermöglichen, falls das Montageelement über das Gehäuse hinausragt.

Vorteilhafterweise kann auch vorgesehen sein, dass die Lufttrocknerpatrone das Siebelement in dem Einschubkanal fixiert. Auf diese Weise kann die korrekte Positionierung des Siebelementes in dem Einschubkanal dauerhaft gewährleistet werden, insbesondere auch während des Betriebs der Druckluftaufbereitungsanlage der üblicherweise fahrbedingt mit mehr oder weniger starken Vibrationen einhergeht, die ansonsten ein Verrutschen des Siebelementes verursachen könnten. Die Fixierung kann dabei in der Ausübung einer Haltekraft auf das Siebelement bestehen, beispielsweise durch ein bündiges Abschließen der montierten Lufttrocknerpatrone mit dem Siebelement, oder über ein elastisches Element erfolgen, beispielsweise das Montageelement, welches bei montierter Lufttrocknerpatrone das Siebelement in seiner Montageposition verspannen kann, wenn die Lufttrocknerpatrone das Montageelement in den Einschubkanal drückt.

Vorzugsweise kann auch vorgesehen sein, dass die Lufttrocknerpatrone starr oder flexibel mit dem Siebelement verbunden ist. Durch das Koppeln, das heißt das Verbinden, von Lufttrocknerpatrone und Siebelement kann insbesondere die Montage des Siebelementes erleichtert werden, da das Siebelement dann gemeinsam mit der Lufttrocknerpatrone montierbar ist, ohne dass weitere zusätzliche Montageschritte notwendig wären. Darüber hinaus kann eine gleichmäßige Wartung der Druckluftaufbereitungsanlage gewährleistet werden, da der Tausch der Lufttrocknerpatrone zwangsläufig gleichzeitig mit dem Tausch des Siebelementes erfolgt. Das Siebelement selbst kann zudem die Montage der Lufttrocknerpatrone vereinfachen, beispielsweise durch Verwendung des Siebelements als Führungszapfen, der das Zusammenführen von Lufttrocknerpatrone und Gehäuse erleichtert. Darüber hinaus kann über die Form des Siebelementes zugleich sichergestellt werden, dass nur geeignete Lufttrocknerpatronen auf dem Gehäuse der Luftaufbereitungsanlage montierbar sind.

Vorteilhafterweise kann vorgesehen sein, dass das Siebelement eine Absetzfläche umfasst. Die Absetzfläche, die beispielsweise bei montiertem Siebelement in dem Einschubkanal zumindest teilweise an der Wand des Einschubkanals anliegt, schützt ebenfalls das Absperrventil vor schädlichen Verkohlungen. Bei einer Demontage wird die Absetzfläche mitgetauscht, so dass das neue Siebelement in einen von Verkohlungen im Wesentlichen freien Einschubkanal eingeschoben oder eingeschraubt wird. Es wird daher vermieden, bei der Montage eines neuen Siebelementes Verkohlungen hinter das neue Siebelement zu verschieben.

Das gattungsgemäße Verfahren wird dadurch weiterentwickelt, dass ein Siebelement zumindest teilweise zwischen dem Verzweigungspunkt und dem Ablassventil in der Entlüftungsleitung angeordnet wird. Auf diese Weise können die Vorteile und Besonderheiten der erfindungsgemäßen Druckluftaufbereitungsanlage auch im Rahmen eines Verfahrens bereitgestellt werden.

Dies kann dadurch weitergebildet werden, dass die Entlüftungsleitung zumindest teilweise als ein Einschubkanal ausgeführt wird, der sich in einer axialen Richtung in einem Gehäuse der Druckluftaufbereitungsanlage erstreckt, wobei das Siebelement in der axialen Richtung in den Einschubkanal eingeschoben wird.

Weiterhin kann vorgesehen sein, dass das Siebelement von der Lufttrocknerpatrone in dem Einschubkanal fixiert wird.

Die Erfindung wird nun mit Bezug auf die begleitenden Zeichnungen anhand bevorzugter Ausführungsformen beispielhaft erläutert.

Es zeigen:
- Figur 1: einen Ausschnitt aus einer schematisch dargestellten Druckluftaufbereitungsanlage;
- Figur 2: ein dreidimensionales Schnittbild eines Gehäuses einer Druckluftaufbereitungsanlage mit einem montierten Siebelement;
- Figur 3: ein weiteres dreidimensionales Schnittbild eines Gehäuses einer Druckluftaufbereitungsanlage mit einem montierten Siebelement;
- Figur 4: eine dreidimensionale Ansicht eines Siebelementes; und
- Figur 5: eine weitere dreidimensionale Ansicht eines Siebelementes.

In den folgenden Zeichnungen bezeichnen gleiche Bezugszeichen gleiche oder gleichartige Teile.

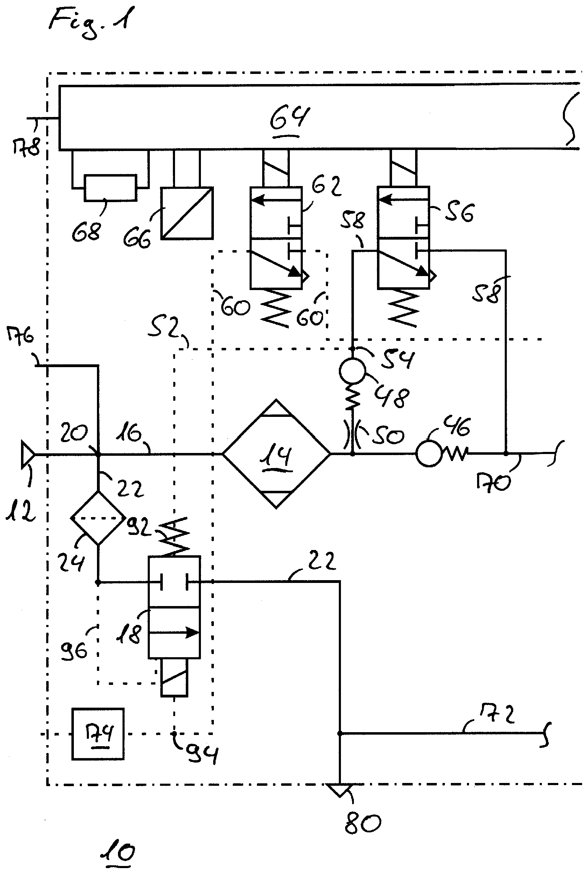

Figur 1 zeigt einen Ausschnitt einer schematisch dargestellten Druckluftaufbereitungsanlage. Die nur teilweise dargestellte Druckluftaufbereitungsanlage 10 weist einen Drucklufteingang 12 auf, an dem üblicherweise ein Kompressor angeschlossen ist. Darüber hinaus umfasst die Druckluftaufbereitungsanlage 10 einen Fremdbefüllungsanschluss 76 über den ebenfalls Druckluft aus einer externen Druckluftquelle der Druckluftaufbereitungsanlage 10 zugeführt werden kann, beispielsweise zu Servicezwecken in einer Werkstatt. Weiterhin ist ein Datenbusanschluss 78 vorgesehen, über den die Druckluftaufbereitungsanlage 10 mit anderen Teilsystemen des Nutzfahrzeugs, beispielsweise einer Motorsteuerung, kommunizieren kann. Die Druckluftaufbereitungsanlage 10 umfasst eine Druckluftförderleitung 16, die den Drucklufteingang 12 mit einer Lufttrocknerpatrone 14 verbindet. Die Lufttrocknerpatrone 14 reinigt die geförderte Druckluft von Öl- und Schmutzpartikeln und entzieht ihr Feuchtigkeit. Zu diesem Zweck umfasst die Lufttrocknerpatrone 14 üblicherweise Koaleszenzfilter oder sonstige Filtereinrichtungen zum Entfernen der Öl- und Schmutzpartikel und ein hygroskopisches Trockenmittel. Die aufbereitete Druckluft wird stromabwärts der Lufttrocknerpatrone 14 über ein Rückschlagventil 46 weitergeleitet. Angedeutet ist ein Mehrkreisschutzventilanschluss 70, wobei das nicht mehr dargestellte Mehrkreisschutzventil eine von der Druckluftaufbereitungsanlage 10 getrennte oder eine in die Druckluftaufbereitungsanlage 10 integrierte Komponente sein kann. Wenn die Kapazität des Trockenmittels der Lufttrocknerpatrone 14 erschöpft ist, kann aufbereitete Druckluft unter Umgehung des Rückschlagventils 46 über eine Regenerationsleitung 58, ein weiteres Rückschlagventil 48 und eine Drossel 50 die Lufttrocknerpatrone 14 unter Umkehrung der Strömungsrichtung regenerieren. Dabei werden in der Lufttrocknerpatrone 14 gesammelte Öl- und Schmutzpartikel sowie in dem Trockenmittel gespeicherte Feuchtigkeit aus der Lufttrocknerpatrone 14 ausgespült. Die Regenerationsluft strömt weiter rückwärts durch die Druckluftförderleitung 16 bis zu einem Verzweigungspunkt 20 und von dort über eine Entlüftungsleitung 22 zu einer Entlüftung 80. In der Entlüftungsleitung 22 ist ein Ablassventil 18 angeordnet, das beispielsweise als 2/2-Wegeventil ausgeführt sein kann. Zwischen dem Verzweigungspunkt 20 und dem Ablassventil 18 ist weiterhin ein Siebelement 24 angeordnet, das grobe Schmutzpartikel zurückhält. Der Regenerationszyklus kann über ein Regenerationsmagnetventil 56, das in der Regenerationsleitung 58 angeordnet ist und beispielsweise als 3/2-Wegeventil ausgeführt sein kann, gesteuert werden. Über eine Steuerleitung 52, die von der Regenerationsleitung 58 an einem Abzweigpunkt 54 entspringt, kann eine Schließfeder 92 des Absperrventils 18 vorgespannt werden, um den pneumatischen Öffnungsdruck des Absperrventils 18 anzupassen, beispielsweise zwischen einem Öffnungsdruck von etwa 9,5 bis 10 bar, wenn die Steuerleitung 52 drucklos ist, und einem Öffnungsdruck von etwa 16 bis 17 bar, wenn die Steuerleitung 52 mit Druck beaufschlagt ist. Das Absperrventil 18 kann über eine weitere Steuerleitung 60 in der ein beispielsweise als 3/2-Wegeventil ausgeführtes Magnetventil 62 angeordnet ist, pneumatisch angesteuert werden. Um die Regenerationsluft über die Entlüftung 80 abzulassen, können sowohl das Regenerationsmagnetventil 56 als auch das Magnetventil 62 gleichzeitig angesteuert werden, so dass die Regenerationsluft über das Siebelement 24 und das Absperrventil 18 zu der Entlüftung 80 gelangt, um dort aus dem System auszutreten. Die weitere Steuerleitung 60 kann einen weiteren Abzweigpunkt 94 aufweisen, über den eine weitere Ventileinrichtung 74 angesteuert sein kann, welche wiederum einen nicht dargestellten Kompressor, der die Druckluft an dem Drucklufteingang 12 bereitstellt, in einen energiesparenden Betriebszustand versetzen kann. Die Ventileinrichtung 74 kann insbesondere eine besonders schnelle Entlüftung der weiteren Steuerleitung 60 ermöglichen, um den Betriebszustand des Kompressors schneller zu ändern. In einem solchen energiesparenden Zustand ist gleichzeitig das Absperrventil 18 angesteuert, so dass eine üblicherweise reduzierte Druckluftfördermenge des Kompressors direkt von dem Drucklufteingang über das Siebelement 24 und das Absperrventil 18 durch die Entlüftung 80 aus dem System austritt. Eine reduzierte Druckluftfördermenge kann beispielsweise etwa 20 Prozent des normalerweise geförderten Druckluftvolumens betragen. Die Entlüftung 80 kann, wie in Figur 1 angedeutet, mit weiteren nicht dargestellten Komponenten der Druckluftaufbereitungsanlage 10 über eine weitere Entlüftungsleitung 72 gekoppelt sein. Diese Komponenten können ebenfalls die Entlüftung 80 zum Ausstoß von Druckluft aus dem System nutzen. Weiterhin können die an dem Regenerationsmagnetventil 56 und dem Magnetventil 62 angedeuteten Entlüftungen auch mit der Entlüftung 80 gekoppelt sein, wobei auf die explizite Darstellung entsprechender Verbindungsleitungen zur besseren Übersicht verzichtet wurde. Die Druckluftaufbereitungsanlage 10 umfasst ein Steuergerät 64, welches das Regenerationsmagnetventil 56 und das Magnetventil 62 ansteuern kann und über den Datenbusanschluss 78 mit weiteren Teilsystemen des Nutzfahrzeugs gekoppelt sein kann. Angedeutet sind weiterhin eine Heizung 68 und ein Drucksensor 66, die von dem Steuergerät 64 gesteuert wird, beziehungsweise über die das Steuergerät 64 Informationen über die in der Druckluftaufbereitungsanlage 10 herrschenden Druckniveaus erhält. Die Heizung 68 kann insbesondere zur Vermeidung des Zufrierens von Druckleitungen genutzt werden. Der Drucksensor 66 ist nur exemplarisch für eine ganze Anzahl von Drucksensoren zu verstehen, die den Druck in der Druckluftaufbereitungsanlage 10 an den verschiedensten Stellen messen können. Insbesondere können vor und hinter dem Siebelement 24 in der Entlüftungsleitung 22 Drucksensoren angeordnet sein, um einen an dem Siebelement 24 abfallenden Staudruck zu bestimmen, wenn das Ablassventil 18 geöffnet ist. Auf diese Weise kann eine Verstopfung des Siebelementes 24 erkannt werden, die das Entweichen der Druckluft während eines Regenerationszyklus behindern würde, wobei diese Verstopfung ein Wechselkriterium darstellen kann. Das Ablassventil 18 dient weiterhin als Sicherheitsventil, um einen gefährlichen Druckanstieg in der Druckluftaufbereitungsanlage 10 zu verhindern. Zu diesem Zweck ist eine Steuerleitung 96 vorgesehen, über die das Ablassventil bei Überschreiten eines einstellbaren Sicherheitsdrucks geöffnet wird.

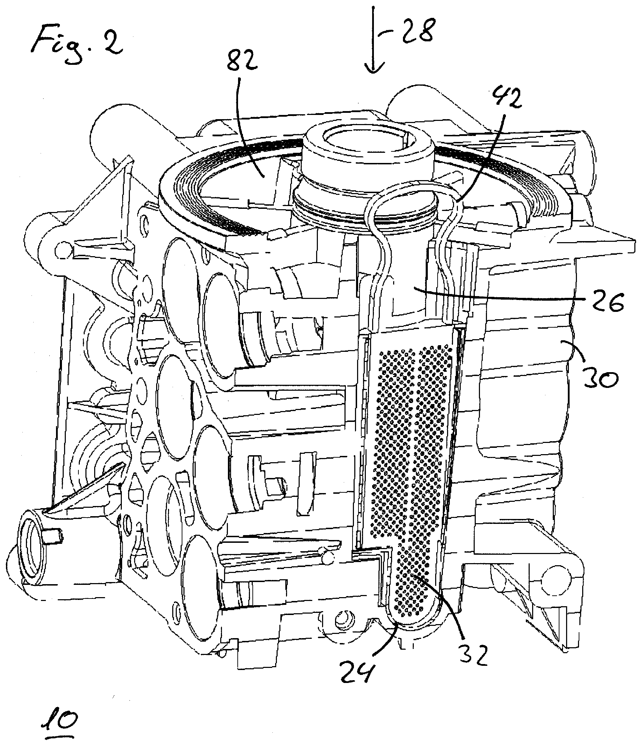

Figur 2 zeigt ein dreidimensionales Schnittbild eines Gehäuses einer Druckluftaufbereitungsanlage mit einem montierten Siebelement. Das dargestellte Gehäuse 30 weist insbesondere einen Lufttrocknerpatronenanschluss 82 auf der Oberseite des Gehäuses 30 auf. In einer axialen Richtung 28 reicht ein Einschubkanal 26 von oben in das Gehäuse 30 hinein, wobei der Einschubkanal 26 von oben frei zugänglich ist, solange die nicht dargestellte Lufttrocknerpatrone 14 nicht an dem Gehäuse 30 montiert ist. In dem Einschubkanal 26 ist das Siebelement 24 dargestellt, wobei von dem Siebelement 24 im Wesentlichen eine Durchtrittsfläche 32, das heißt die Fläche des eigentlichen Siebs beziehungsweise die Siebfläche, sichtbar ist. Nach oben aus dem Einschubkanal 26 ragend ist weiterhin ein Montageelement 42 dargestellt, das als ein Bügel ausgeführt ist, welcher bei der Montage der Lufttrocknerpatrone an dem Gehäuse 30 nach unten in den Einschubkanal 26 gedrückt wird, wodurch das Siebelement 24 in der dargestellten Position innerhalb des Einschubkanals 26 verspannt werden kann. Der dargestellte Einschubkanal 26 erstreckt sich in der axialen Richtung 28 in dem Gehäuse 30, wobei die axiale Richtung 28 mit einer Montagerichtung der nicht dargestellten Lufttrocknerpatrone zusammenfällt. Es ist jedoch auch denkbar, dass die axiale Richtung 28 in der sich der Einschubkanal 26 in dem Gehäuse 30 erstreckt nicht mit der Montagerichtung der Lufttrocknerpatrone zusammenfällt. Insbesondere kann eine Zugangsöffnung für den Einschubkanal 26 vorgesehen sein, die bei montierter Lufttrocknerpatrone nicht von dieser abgedeckt wird, sondern über eine eigene Abdeckung verfügt. Auf diese Weise kann ein Austausch des Siebelementes 24 vorgenommen werden, ohne die Lufttrocknerpatrone demontieren zu müssen. Das Montageelement 42 ist optional. Beispielsweise kann auch die Durchtrittsfläche 32 des Siebelementes 24 bis auf die Höhe des Lufttrocknerpatronenanschlusses 82 hinaufreichen, so dass bei montierter Lufttrocknerpatrone das Siebelement 24 bündig, ohne Vermittlung eines Montageelementes 42 an der Lufttrocknerpatrone ansteht und auf diese Weise in dem Einschubkanal 26 fixiert ist.

Es ist weiterhin denkbar, dass das Siebelement 24 fest mit der nicht dargestellten Lufttrocknerpatrone gekoppelt ist. Auf diese Weise kann insbesondere der Montagevorgang vereinfacht werden, da bei einer Montage der Lufttrocknerpatrone automatisch das Siebelement 24 montiert wird. Die Kopplung der Lufttrocknerpatrone mit dem Siebelement 24 kann dabei fest, das heißt starr, oder flexibel, das heißt beweglich, erfolgen. Beispielsweise kann das Montageelement 42 mit einer nicht dargestellten Bodenplatte der Lufttrocknerpatrone verbunden sein. Die Ausführung der Kopplung zwischen der Lufttrocknerpatrone und dem Siebelement ist an die Anschlussmöglichkeit der Lufttrocknerpatrone an das Gehäuse 30 anzupassen. Verfügt der Lufttrocknerpatronenanschluss über eine Bajonettkopplung, das heißt, dass die Lufttrocknerpatrone ohne Drehbewegung auf das Gehäuse 30 aufgesetzt und verriegelt werden kann, so ist eine starre Kopplung zwischen dem Siebelement 24 und der Lufttrocknerpatrone besonders leicht möglich, wobei im Falle einer starren Kopplung das Siebelement 24 beispielsweise als eine Verdrehsicherung gegenüber dem Gehäuse bei der Montage der Lufttrocknerpatrone genutzt werden kann.

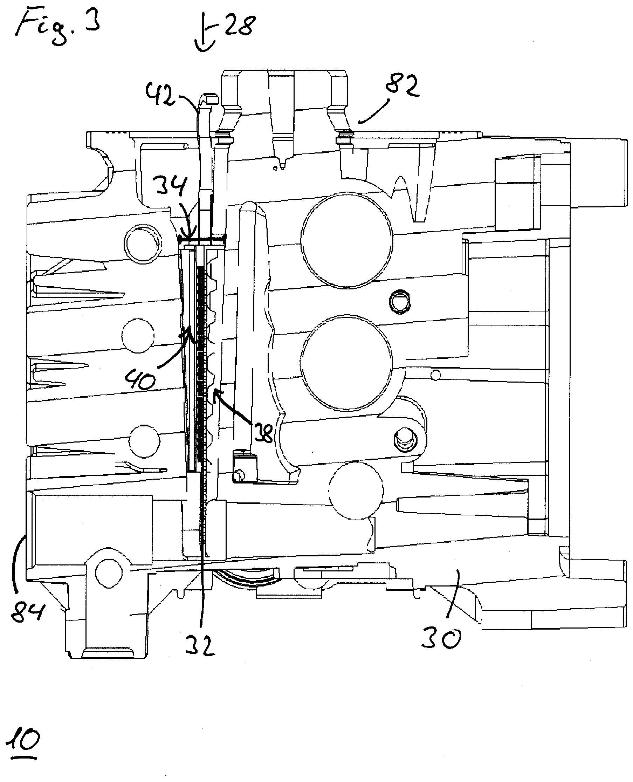

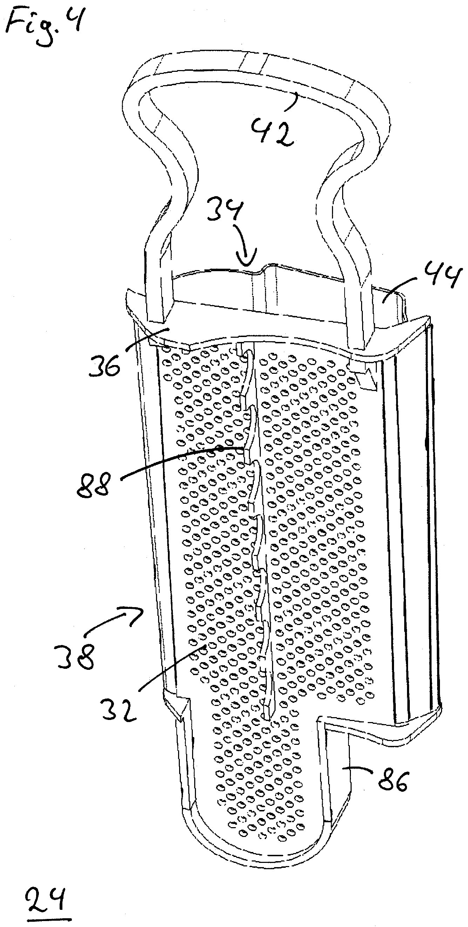

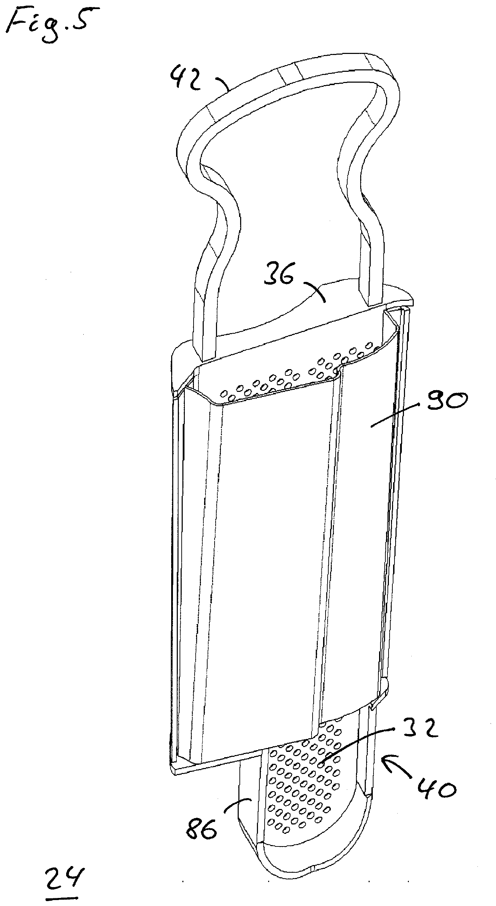

Figur 3 zeigt ein weiteres dreidimensionales Schnittbild eines Gehäuses einer Druckluftaufbereitungsanlage mit einem montierten Siebelement. Das im Inneren des Gehäuses 30 angeordnete Siebelement 24 ist lediglich von der Seite zu sehen, so dass sich die aus Figur 2 bereits bekannte Durchtrittsfläche 32 sich im Wesentlichen als eine parallel zu der axialen Richtung 28 erstreckende Linie abzeichnet. Die Durchtrittsfläche 32 unterteilt den Einschubkanal 26 in der axialen Richtung 28 in eine Abströmseite 38 und eine Anströmseite 40. Im Betrieb wird nicht aufbereitete Druckluft von einem Kompressoranschluss 84, der mit dem Drucklufteingang 12 identifiziert werden kann oder mit diesem verbunden ist, in das Gehäuse 30 gefördert, steigt dort in dem Einschubkanal 26 an der Anströmseite 40 entlang nach oben zu dem Lufttrocknerpatronenanschluss 82 und gelangt von dort weiter in das Innere der Druckluftaufbereitungsanlage 10. Während eines Regenerationsbetriebs wird die Strömungsrichtung umgekehrt und bereits aufbereitete Druckluft, die zur Regeneration der nicht dargestellten Lufttrocknerpatrone verwendet wurde, strömt von dem Lufttrocknerpatronenanschluss 82 auf der Anströmseite 40 nach unten durch den Einschubkanal an der Durchtrittsfläche 32 entlang. Die Luft kann nicht auf die Abströmseite 38 gelangen, ohne durch die Durchtrittsfläche 32 hindurchzutreten, da eine Querschnittsfläche 34 des Einschubkanals 26 in geeigneter Weise teilweise blockiert ist. Diese Ausgestaltung des Siebelementes 24 wird in den Figuren 4 und 5 noch genauer ersichtlich. Die mit Öl- und Schmutzpartikeln und Feuchtigkeit beladene Regenerationsluft tritt durch die Durchtrittsfläche 32 auf die Abströmseite 38 über, wobei die groben Schmutzpartikel an der Durchtrittsfläche 32 zurückgehalten werden.

Figur 4 zeigt eine dreidimensionale Ansicht eines Siebelementes. Das dargestellte Siebelement 24 umfasst einen Rahmen 86, in dem die Durchtrittsfläche 32 angeordnet ist. Die Durchtrittsfläche 32 umfasst ein Siebgitter, wobei die Öffnungen innerhalb des Gitters einen Durchmesser zwischen etwa 0,5 und 1,5 Millimeter, vorzugsweise etwa 1,0 Millimeter aufweisen und die dazwischen liegenden Gitterstege eine Bereite zwischen etwa 0,5 Millimeter und 0,9 Millimeter, vorzugsweise etwa 0,7 Millimeter aufweisen. Dargestellt ist die Abströmseite 38 des Siebelementes 24, auf der ein Steg 88 senkrecht zu der Durchtrittsfläche 32 in der Siebfläche angeordnet ist, der ein Anliegen der Durchtrittsfläche 32 an die Wandung des Einschubkanals im montierten Zustand bei wechselnden Druckverhältnissen verhindert. Der Steg 88 erhöht weiterhin die Stabilität der Durchtrittsfläche 32 gegenüber Verbiegen bei der Montage. Im oberen Bereich des Siebelementes 24 ist die Querschnittsfläche 34 des Einschubkanals 26 erkennbar, wobei diese unterteilt ist in eine Kopffläche 36, die gemeinsam mit der Durchtrittsfläche 28 die Abströmseite 38 von der Anströmseite 40 im Einschubkanal 26 trennt. Weiterhin ist das Montageelement 42 in Form eines Bügels, der elastisch ausführt sein kann und eine Absetzfläche 44, die die Innenwand des Einschubkanals vor Verschmutzungen schützt, sichtbar.
Figur 5 zeigt eine weitere dreidimensionale Ansicht eines Siebelementes. Das in Figur 5 dargestellte Siebelement 24 zeigt die Anströmseite 40 des Siebelementes 24. Ein großer Teil der Anströmseite 40 ist durch ein Formteil 90 verdeckt, welches im montierten Zustand an einer Wandung des Einschubkanals anliegen kann und auf seiner der Durchtrittsfläche 32 zugewandten Seite die aus Figur 4 bekannte Absetzfläche 44 bereitstellt. Das Formteil 90 bildet somit eine korbartige Vertiefung aus, in der sich Öl- und Schmutzpartikel sammeln können. Der untere Rand des Rahmens 86 kann wie in Figur 5 dargestellt auf der Anströmseite 40 verbreitert sein, so dass sich an der Anströmseite 40 herunterfallende Öl- und Schmutzpartikel auf dem Rahmen 86 ansammeln können. Dies kann dadurch unterstützt werden, dass eine Kante des Rahmens 86 nach oben gezogen wird, um eine Tasche auszubilden.

### Bezugszeichenliste

- 10: Druckluftaufbereitungsanlage
- 12: Drucklufteingang
- 14: Lufttrocknerpatrone
- 16: Druckluftförderleitung
- 18: Ablassventil
- 20: Verzweigungspunkt
- 22: Entlüftungsleitung
- 24: Siebelement
- 26: Einschubkanal
- 28: axiale Richtung
- 30: Gehäuse
- 32: Durchtrittsfläche
- 34: Querschnittsfläche
- 36: Kopffläche
- 38: Abströmseite
- 40: Anströmseite
- 42: Montageelement
- 44: Absetzfläche
- 46: Rückschlagventil
- 48: weiteres Rückschlagventil
- 50: Drossel
- 52: Steuerleitung
- 54: Abzweigpunkt
- 56: Regenerationsmagnetventil
- 58: Regenerationsleitung
- 60: weitere Steuerleitung
- 62: Magnetventil
- 64: Steuergerät
- 66: Drucksensor
- 68: Heizung
- 70: Mehrkreisschutzventilanschluss
- 72: weitere Entlüftungsleitung
- 74: Ventileinrichtung
- 76: Fremdbefüllungsanschluss
- 78: Datenbusanschluss
- 80: Entlüftung
- 82: Lufttrocknerpatronenanschluss
- 84: Kompressoranschluss
- 86: Rahmen
- 88: Steg
- 90: Formteil
- 92: Schließfeder
- 94: weiterer Abzweigpunkt
- 96: Steuerleitung

## Patentansprüche

1. Druckluftaufbereitungsanlage (10) für ein Fahrzeug, insbesondere für ein Nutzfahrzeug, umfassend
- einen Drucklufteingang (12),
- eine Lufttrocknerpatrone (14), die über eine Druckluftförderleitung (16) mit dem Drucklufteingang (12) gekoppelt ist, und
- ein Ablassventil (18), das in einer an einem Verzweigungspunkt (20) von einer Druckluftförderleitung (16) abzweigenden Entlüftungsleitung (22) angeordnet ist, wobei
- ein Siebelement (24) zumindest teilweise zwischen dem Verzweigungspunkt (20) und dem Ablassventil (18) in der Entlüftungsleitung (22) angeordnet ist, **dadurch gekennzeichnet, dass**
- die Entlüftungsleitung (22) zumindest teilweise als ein Einschubkanal (26) ausgeführt ist, der sich in einer axialen Richtung (28) in einem Gehäuse (30) der Druckluftaufbereitungsanlage (10) erstreckt, wobei das Siebelement (24) in der axialen Richtung (28) in den Einschubkanal (26) einschiebbar ist.

2. Druckluftaufbereitungsanlage (10) nach Anspruch 1, **dadurch gekennzeichnet, dass** eine Durchtrittsfläche (32) des Siebelements (24) senkrecht zu einer Querschnittsfläche (34) des Einschubkanals (26) liegt.

3. Druckluftaufbereitungsanlage (10) nach Anspruch 2, **dadurch gekennzeichnet, dass** das Siebelement (24) eine Kopffläche (36) umfasst, die zusammen mit der Durchtrittsfläche (32) eine Abströmseite (38) des Siebelements (24) von einer Anströmseite (40) des Siebelements (24) trennt.

4. Druckluftaufbereitungsanlage (10) nach einem der vorhergehenden Ansprüche, **dadurch gekennzeichnet, dass** das Siebelement (24) ein Montageelement (42) umfasst.

5. Druckluftaufbereitungsanlage (10) nach einem vorhergehenden Ansprüche, **dadurch gekennzeichnet, dass** die Lufttrocknerpatrone (14) das Siebelement (24) in dem Einschubkanal (26) fixiert.

6. Druckluftaufbereitungsanlage (10) nach Anspruch 5, **dadurch gekennzeichnet, dass** die Lufttrocknerpatrone (14) starr oder flexibel mit dem Siebelement (24) verbunden ist.

7. Druckluftaufbereitungsanlage (10) nach einem der vorhergehenden Ansprüche, **dadurch gekennzeichnet, dass** das Siebelement (24) eine Absetzfläche (44) umfasst.

8. Verfahren zur Herstellung einer Druckluftaufbereitungsanlage (10) für ein Fahrzeug, insbesondere ein Nutzfahrzeug, wobei die Druckluftaufbereitungsanlage (10) einen Drucklufteingang (12), eine Lufttrocknerpatrone (14), die über eine Druckluftförderleitung (16) mit dem Drucklufteingang (12) gekoppelt ist, und ein Ablassventil (18), das in einer an einem Verzweigungspunkt (20) von der Druckluft- förderleitung (16) abzweigenden Entlüftungsleitung (22) angeordnet ist, umfasst, wobei ein Siebelement (24) zumindest teilweise zwischen dem Verzweigungspunkt (20) und dem Ablassventil (18) in der Entlüftungsleitung (22) angeordnet wird, **dadurch gekennzeichnet, dass** die Entlüftungsleitung (22) zumindest teilweise als ein Einschubkanal (26) ausgeführt wird, der sich in einer axialen Richtung (28) in einem Gehäuse (30) der Druckluftaufbereitungsanlage (10) erstreckt, wobei das Siebelement (24) in der axialen Richtung (28) in den Einschubkanal (26) eingeschoben wird.

9. Verfahren nach Anspruch 8, **dadurch gekennzeichnet, dass** das Siebelement (24) von der Lufttrocknerpatrone (14) in dem Einschubkanal (26) fixiert wird.

## Claims

1. Compressed air conditioning system (10) for a vehicle, in particular for a commercial vehicle, comprising:
- a compressed air inlet (12),
- an air drier cartridge (14) coupled to the compressed air inlet (12) via a compressed air delivery line (16), and
- a bleeder valve (18) located in a vent line (22) branching off a compressed air delivery line (16) at a branching point (20), wherein
- a screening element (24) is located in the vent line (22) at least partially between the branching point (20) and the bleeder valve (18),
**characterised in that**
- the vent line (22) is at least partially designed as a insertion passage (26), which extends in an axial direction (28) in a housing (30) of the compressed air conditioning system (10), wherein the screening element (24) can be inserted into the insertion passage (26) in the axial direction (28).

2. Compressed air conditioning system (10) according to claim 1, **characterised in that** a passage surface (32) of the screening element (24) is perpendicular to a cross-sectional surface (34) of the insertion passage (26).

3. Compressed air conditioning system (10) according to claim 2, **characterised in that** the screening element (24) comprises a head surface (36), which, together with the passage surface (32), separates a downstream side (38) of the screening element (24) from an upstream side (40) of the screening element (24).

4. Compressed air conditioning system (10) according to any of the preceding claims, **characterised in that** the screening element (24) comprises a mounting element (42).

5. Compressed air conditioning system (10) according to any of the preceding claims, **characterised in that** the air drier cartridge (14) fixes the screening element (24) in the insertion passage (26).

6. Compressed air conditioning system (10) according to claim 5, **characterised in that** the air drier cartridge (14) is connected to the screening element (24) rigidly or flexibly.

7. Compressed air conditioning system (10) according to any of the preceding claims, **characterised in that** the screening element (24) comprises depositing surface (44).

8. Method for producing a compressed air conditioning system (10) for a vehicle, in particular for a commercial vehicle, wherein the compressed air conditioning system (10) comprises a compressed air inlet (12), an air drier cartridge (14) coupled to the compressed air inlet (12) via a compressed air delivery line (16), and a bleeder valve (18) located in a vent line (22) branching off a compressed air delivery line (16) at a branching point (20), wherein a screening element (24) is located in the vent line (22) at least partially between the branching point (20) and the bleeder valve (18), **characterised in that** the vent line (22) is at least partially designed as an insertion passage (26), which extends in an axial direction (28) in a housing (30) of the compressed air conditioning system (10), wherein the screening element (24) is inserted into the insertion passage (26) in the axial direction (28).

9. Method according to claim 8, **characterised in that** the screening element (24) is fixed in the insertion passage (26) by the air drier cartridge (14).

## Revendications

1. Installation (10) de traitement de l'air comprimé pour un véhicule, notamment pour un véhicule utilitaire, comprenant
- une entrée (12) d'air comprimé,
- une cartouche (14) de sécheur d'air, qui est reliée à l'entrée (12) d'air comprimé par un conduit (16)de transport d'air comprimé et
- une soupape (18) d'évacuation, qui est montée dans un conduit (22) de purge bifurquant en un point (20) de bifurcation d'un conduit (16) de transport d'air comprimé, dans laquelle
- un élément (24) de tamis est monté, au moins en partie, entre le point (20) de bifurcation et la soupape (18) d'évacuation, dans le conduit (22) de purge,
**caractérisée en ce que**
- le conduit (22) de purge est réalisé, au moins en partie, sous la forme d'un canal (26) à enfichage, qui s'étend dans une direction (28) axiale dans une enveloppe (30) de l'installation (10) de traitement de l'air comprimé, l'élément (24) de tamis pouvant être inséré dans le canal (26) à enfichage.

2. Installation (10) de traitement de l'air comprimé suivant la revendication 1, **caractérisée en ce qu'**une surface (32) de passage de l'élément (24) de tamis est perpendiculaire à une surface (34) de section transversale du canal (26) à enfichage.

3. Installation (10) de traitement de l'air comprimé suivant la revendication 2, **caractérisée en ce que** l'élément (24) de tamis comprend une surface (36) de tête, qui, ensemble avec la surface (32) de passage, sépare un côté (38) d'évacuation de l'élément (24) de tamis d'un côté (40) d'afflux de l'élément (24) de tamis.

4. Installation (10) de traitement de l'air comprimé suivant l'une des revendications précédentes, **caractérisée en ce que** l'élément (24) de tamis comprend l'élément (42) de montage.

5. Installation (10) de traitement de l'air comprimé suivant l'une des revendications précédentes, **caractérisée en ce que** la cartouche (14) de sécheur d'air immobilise l'élément (24) de tamis dans le canal (26) à enfichage.

6. Installation (10) de traitement de l'air comprimé suivant la revendication 5, **caractérisée en ce que** la cartouche (14) de sécheur d'air est reliée de manière rigide ou souple à l'élément (24) de tamis.

7. Installation (10) de traitement de l'air comprimé suivant l'une des revendications précédentes, **caractérisée en ce que** l'élément (24) de tamis comprend une surface (44) de décantation.

8. Procédé de fabrication d'une installation (10) de traitement de l'air comprimé pour un véhicule, notamment un véhicule utilitaire, dans lequel l'installation (10) de traitement de l'air comprimé comprend une entrée (12) d'air comprimé, une cartouche (14) de sécheur d'air, qui est reliée à l'entrée (12) d'air comprimé par un conduit (16) de transport d'air comprimé, et une soupape (18) de sortie, qui est montée dans un conduit (22) de purge bifurquant en un point (20) de bifurcation du conduit (16) de transport d'air comprimé, dans lequel on monte, dans le conduit (22) de purge, un élément (24) de tamis, au moins en partie entre le point (20) de bifurcation et la soupape (18) d'évacuation, **caractérisé en ce que** l'on réalise le conduit (22) de purge, au moins en partie, sous la forme d'un canal (26) à enfichage, qui s'étend dans une direction (28) axiale dans une enveloppe (30) de l'installation (10) de traitement de l'air comprimé, l'élément (24) de tamis étant introduit dans la direction (28) axiale dans le canal (26) à enfichage.

9. Procédé suivant la revendication 8, **caractérisé en ce que** l'on immobilise l'élément (24) de tamis dans le canal (26) à enfichage par la cartouche (14) de sécheur d'air.
